# EUROPEAN PATENT SPECIFICATION

(11) **EP 4 250 407 B1**
(45) Date of publication and mention of the grant of the patent: **30.09.2026**
(21) Application number: 23161267.2
(22) Date of filing: 10.03.2023
(51) Int. Cl.: H01M 4/66, H01M 4/78, H01M 10/0562, H01M 10/0585, H01M 10/0583

(54) **ELECTRODE STRUCTURE AND ALL-SOLID-STATE SECONDARY BATTERY INCLUDING THE SAME**
ELEKTRODENSTRUKTUR UND FESTKÖRPERSEKUNDÄRBATTERIE DAMIT
STRUCTURE D'ÉLECTRODE ET BATTERIE SECONDAIRE ENTIÈREMENT SOLIDE LA COMPRENANT

(30) Priority: 22.03.2022 KR 20220035478
(43) Date of publication of application: 27.09.2023
(73) Proprietor: Samsung SDI Co., Ltd., Yongin-si, Gyeonggi-do 17084 (KR)
(72) Inventor: Lee, Eungyeong, 17084 Yongin-si, Gyeonggi-do (KR); Ryu, Younggyoon, 17084 Yongin-si, Gyeonggi-do (KR); Park, Kyusung, 17084 Yongin-si, Gyeonggi-do (KR); Lee, Joowook, 17084 Yongin-si, Gyeonggi-do (KR); Lee, Jaejun, 17084 Yongin-si, Gyeonggi-do (KR); Yoon, Jaegu, 17084 Yongin-si, Gyeonggi-do (KR)
(74) Representative: Gulde & Partner

(56) References cited:
- EP-A2- 1 065 743
- US-A1- 2018 248 228
- US-B1- 6 277 515

## Description

### BACKGROUND

### 1. Field

Embodiments relate to an electrode structure and an all-solid-state secondary battery including the electrode structure.

### 2. Description of the Related Art

Recently, the development of batteries with high energy density and safety has been actively carried out in step with industrial demand. For example, lithium-ion batteries may be put to practical use not only in the fields of information-related devices and communication devices, but also in the field of automobiles. In the automobile field, safety may be especially important because it is related to life.

Some lithium-ion batteries may use an electrolyte solution including a combustible organic solvent, and thus, there is a possibility of overheating and fire when a short circuit occurs. An all-solid-state secondary battery using a solid electrolyte instead of an electrolyte has been considered.

The all-solid-state secondary battery does not use a combustible organic solvent, and it is possible to greatly reduce the possibility of a fire or explosion even if a short circuit were to occur. Therefore, such an all-solid-state secondary battery may significantly increase safety compared to a lithium-ion battery using an electrolyte. In addition, an all-solid-state secondary battery may have a high energy density. Document EP 1 065 743 A2 discloses a lithium ion polymer secondary battery composed of a lamination of a positive-electrode sheet, a negative-electrode sheet, and a polymer electrolyte layer provided therebetween, and to a gelatinous polymer electrolyte for sheet batteries which is used in the polymer electrolyte layer. Further examples of relevant batteries are disclosed in documents US 2018/248228 Al and US 6 277 515 B1.

### SUMMARY

The invention is set out in the appended set of claims

According to an embodiment, an electrode structure includes an anode current collector having a first surface and a second surface, the first surface including a first portion, a second portion, and a middle portion between the first portion and the second portion, the first portion and the second portion being oriented to face outwardly in opposite directions with the middle portion therebetween, and the anode current collector being folded such that the second surface faces inwardly in the anode current collector; a first anode plate layer on, in particular directly on, the first portion of the first surface; a second anode plate layer on, in particular directly on, the second portion of the first surface; a first solid electrolyte layer on, in particular directly on, an outer side of the first anode plate layer; a second solid electrolyte layer on, in particular directly on, an outer side of the second anode plate layer; a first cathode plate layer on, in particular directly on, an outer side of the first solid electrolyte layer; a second cathode plate layer on, in particular directly on, an outer side of the second solid electrolyte layer; and an elastic sheet inside an interior space of the folded anode current collector. The interior space of the folded anode current collector may be defined by the second surface of the anode current collector. The elastic sheet is of an elasticity capable of absorbing a volume expansion of an anode during charging and discharging.

The elastic sheet may include a polymer sheet having a deformation rate in a range of about 30% to about 60%, in particular about 35% to about 55%, particularly preferred about 40% to about 50%. The polymer sheet may be a urethane polymer sheet having a deformation rate of any of the above-mentioned ranges.

The electrode structure may further include a cathode current collector on, in particular directly on, an outer side of the first cathode plate layer or the second cathode plate layer.

The anode current collector may include or consist of a metal, e.g. stainless steel. Additionally or alternatively, the anode current collector may include copper (Cu), titanium (Ti), iron (Fe), cobalt (Co), nickel (Ni), or the like.

The second surface and the middle portion of the first surface may be uncoated regions.

The first anode plate layer and/or the second anode plate layer may include a cathode active material including a ternary lithium transition metal oxide having a layered rock salt structure. When the cathode active material includes a ternary lithium transition metal oxide having a layered rock salt structure, energy density and thermal stability of an all-solid-state secondary battery may be further improved.

The first cathode plate layer and/or the second cathode plate layer may include an anode active material including a mixture of first particles including amorphous carbon and second particles including metals or metalloids.

The content of the second particles may be in a range of about 8% to about 60% by weight, about 10% to about 50 % by weight, about 15% to about 40% by weight, or about 20% to about 30% by weight based on the total weight of the mixture. When the second particle has a content in these ranges, the cycle characteristics of an all-solid-state secondary battery may further be improved.

According to an embodiment, an all-solid-state secondary battery comprises an electrode structure stack in which a plurality of electrode structures according to an embodiment, in particular a plurality of the above-mentioned electrode structures, are stacked.

The all-solid-state secondary battery may further include a first outermost stack at one end of the electrode structure stack and including a sequentially stacked cathode plate layer, solid electrolyte layer, anode plate layer, anode current collector, and elastic sheet, and a second outermost stack at another end of the electrode structure stack and including a sequentially stacked cathode current collector, cathode plate layer, solid electrolyte layer, anode plate layer, anode current collector, and elastic sheet. The end of the electrode structure stack may be opposite to the other end of the electrode structure stack.

The electrode structure may further include a cathode current collector thereon, the anode current collector of the electrode structure may include an anode tab protruding therefrom, the cathode current collector of the electrode structure may include a cathode tab protruding therefrom, and the anode tab may protrude in a same protrusion direction as a protrusion direction of the cathode tab.

The electrode structure may further include a cathode current collector thereon, the anode current collector of the electrode structure may include an anode tab protruding therefrom, the cathode current collector of the electrode structure may include a cathode tab protruding therefrom, and the anode tab may protrude in a protrusion direction that is opposite to and parallel with a protrusion direction of the cathode tab.

The anode current collector of the electrode structure may include an anode tab on, in particular directly on, the middle portion thereof.

The plurality of electrode structures may include a first electrode structure in contact with a second electrode structure, and a folding direction of the anode current collector of the first electrode structure may be opposite to a folding direction of the anode current collector of the second electrode structure such that an opening of the folded anode current collector of the first electrode structure opens in a direction opposite to an opening of the folded anode current collector of the second electrode structure.

The plurality of electrode structures may include a first electrode structure in contact with a second electrode structure, the first portion of the first surface of the anode current collector of the first electrode structure and the second portion of the first surface of the anode current collector of the second electrode structure may contact and accommodate the elastic sheet of the first electrode structure therebetween, and the second portion of the first surface of the anode current collector of the first electrode structure and the first portion of the first surface of the anode current collector of the second electrode structure may contact and accommodate the elastic sheet of the second electrode structure therebetween.

### BRIEF DESCRIPTION OF THE DRAWINGS

Features will be apparent to those of skill in the art by describing in detail exemplary embodiments with reference to the attached drawings in which:
FIG. 1 is a cross-sectional view showing an electrode structure according to an embodiment of the present disclosure;
FIG. 2 is a cross-sectional view illustrating an all-solid-state secondary battery in which an electrode structure is stacked according to an embodiment of the present disclosure;
FIG. 3 is a cross-sectional view illustrating first and second outermost stacks among all-solid-state secondary batteries according to an embodiment of the present disclosure;
FIG. 4 is a front view of a stack in which an anode current collector, a solid electrolyte layer, and a cathode plate layer are stacked as viewed in a stacking direction and a cathode current collector to be stacked on the cathode plate layer, in an all-solid-state secondary battery according to an embodiment of the present disclosure;
FIG. 5 is a front view of a stack in which an anode current collector, a solid electrolyte layer, and a cathode plate layer are stacked as viewed in a stacking direction and a cathode current collector to be stacked on the cathode plate layer, in an all-solid-state secondary battery according to another embodiment of the present disclosure;
FIG. 6 is a front view of a stack in which an anode current collector, a solid electrolyte layer, and a cathode plate layer are stacked in an all-solid-state secondary battery according to another embodiment of present the disclosure;
FIG. 7 is a diagram illustrating an electrode structure stack in which a plurality of electrode structures are stacked in an all-solid-state secondary battery according to an embodiment of the present disclosure;
FIG. 8 is a diagram illustrating a state in which a plurality of electrode structures are stacked in an all-solid-state secondary battery according to another embodiment of the present disclosure;
FIG. 9 is a diagram showing a state in which a plurality of electrode structures are stacked in an all-solid-state secondary battery according to another embodiment of the present disclosure; and
FIG. 10 is a diagram showing a state in which a plurality of electrode structures are stacked in an all-solid-state secondary battery according to another embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout.

As used herein, the terms "or" and "and/or" are not exclusive terms and include any and all combinations of one or more of the associated listed items. Expressions such as "at least one of," when preceding a list of elements, modify the entire list of elements and do not modify the individual elements of the list.

In the following embodiments, it will be understood that, although the terms "first", "second", "third", etc., may be used herein to describe various elements, these elements should not be limited by these terms and do not imply or require sequential inclusion.

In the following embodiments, the singular forms include the plural forms unless the context clearly indicates otherwise.

In the following embodiments, the terms "comprises," "comprising," "includes," and/or "including," when used herein, specify the presence of stated features and/or constituent elements, but do not preclude the addition of one or more other features and constituent elements.

In the following examples, the x-axis, the y-axis and the z-axis are not limited to three axes of the rectangular coordinate system, and may be interpreted in a broader sense. For example, the x-axis, the y-axis, and the z-axis may be perpendicular to one another, or may represent different directions that are not perpendicular to one another.

When a certain embodiment may be implemented differently, a specific process order may be performed differently from the described order. For example, two consecutively described processes may be performed substantially at the same time or performed in an order opposite to the described order.

Hereinafter, an electrode structure according to embodiments and an all-solid-state secondary battery including the same will be described in detail.

Among materials for all-solid-state secondary batteries, not only lithium metal but also materials such as an alloy, graphite, silicon, and carbon may be used as anode materials. A method of electrodepositing a new Li atomic layer on an anode surface by electrodeposition of lithium ions moving from a cathode, e.g., a non-anode structure, may be considered.

In a non-anode all-solid-state secondary battery, it is not a mechanism of inserting and deintercalating lithium ions in a structure of graphite or silicon anode material as in the principle of using a liquid electrolyte, but in the case of an all-solid-state secondary battery using the stacking mechanism of the Li atomic layer, a volume compensation layer, e.g., an elastic sheet according to the present embodiment capable of compensating for volume expansion of the anode electrode layer, may be used.

An electrode structure and an all-solid-state secondary battery including the same according to the present embodiment may be related to a unit cell in an all-solid-state secondary battery, e.g., an electrode structure and a structure for forming an all-solid-state secondary battery by stacking the electrode structure.

In order to realize a high-capacity all-solid-state secondary, cathodes and anodes may be stacked. An electrode structure and an all-solid-state secondary battery including the electrode structure according to an embodiment of the present disclosure may have a simplified manufacturing process while including an elastic sheet that may help absorb a volume expansion of an anode during charging and discharging of the all-solid-state secondary battery.

### Electrode structure

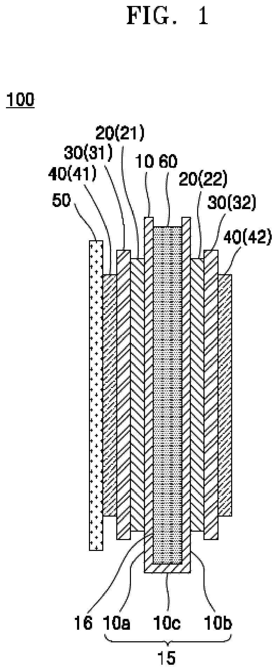

FIG. 1 is a cross-sectional view showing an electrode structure 100 according to an embodiment of the present disclosure.

Referring to FIG. 1, the electrode structure 100 of the present disclosure includes an anode current collector 10 having a first surface 15 and a second surface 16. The first surface 15 includes a first portion 10a, a second portion 10b, and an intermediate or middle portion 10c between the first portion 10a and the second portion 10b. The first portion 10a and the second portion 10b are oriented outwardly (e.g., may face toward the outside) in opposite directions from each other, (e.g., with respect to or at sides of the middle portion 10c). The anode current collector 10 has a folded structure that is folded such that the second surface 16 is an inner surface thereof. First and second anode plate layers 21 and 22 are respectively on the first portion 10a and the second portion 10b of the first surface 15. First and second solid electrolyte layers 31 and 32 are respectively on outer sides of the first and second anode plate layers 21 and 22. First and second cathode plate layers 41 and 42 are respectively on outer sides of the first and second solid electrolyte layers 31 and 32.

An elastic sheet 60 is inside the folded structure of the anode current collector 10. The elastic sheet 60 may help absorb a volume change of an anode electrode layer during charging and discharging an all-solid-state secondary battery 1000. It is possible to help protect the anode electrode layer from a volume change during charging and discharging through a buffer structure such as the elastic sheet 60, thereby improving the durability of the all-solid-state secondary battery 1000. The anode electrode layer described above may include an anode plate layer 20. In an implementation, a cathode current collector 50 on an outer side of the first cathode plate layer 41 or the second cathode plate layer 42 may further be included.

The anode current collector 10 of the present disclosure includes the first surface 15 and the second surface 16. The first surface 15 includes the first portion 10a, the second portion 10b, and the middle portion 10c dividing or between the first portion 10a and the second portion 10b.

The first and second anode plate layers 21 and 22 may be respectively coated on the first portion 10a and the second portion 10b of the first surface 15. The middle portion 10c may be an uncoated region on which the anode plate layer 20 is not coated. In an implementation, the entire second surface 16 may be an uncoated region.

In an implementation, the anode current collector 10 may be folded with the middle portion 10c at the center, and the first portion 10a and the second portion 10b, which may be coated with the anode plate layer 20, may be oriented or face outwardly in opposite directions from each other, and the second surface 16 may face inwardly, e.g., toward the inside.

The elastic sheet 60 is inside the folded structure of the anode current collector 10, e.g. as described above, and the electrode structure 100 having a buffer structure is formed. The elastic sheet 60 is inside the folded anode current collector 10, and it is possible to absorb or otherwise compensate for a volume change of the anode plate layer 20 during charging and discharging.

The electrode structure 100 is formed by disposing the first and second solid electrolyte layers 31 and 32 on, in particular directly on, outer sides of the first and second anode plate layers 21 and 22, respectively, the first and second cathode plate layers 41 and 42 on, in particular directly on, outer sides of the first and second solid electrolyte layers 31 and 32, respectively, and the cathode current collector 50 on, in particular directly on, an outer side of the first cathode plate layer 41 or the second cathode plate layer 42.

Hereinafter, each component constituting the electrode structure 100 is described.

### Anode current collector

In an implementation, the anode current collector 10 may include a material that does not react with lithium, e.g., that does not form either an alloy or a compound with lithium. The material of the anode current collector 10 may include or consist of a metal, e.g., stainless steel, copper (Cu), titanium (Ti), iron (Fe), cobalt (Co), nickel (Ni), or the like. In an implementation, a suitable current collector material may be used. In an implementation anode current collector 10 may include one of the metals described above, an alloy of two or more metals, or a coating material.

In an implementation, the anode current collector 10 may include stainless steel. Stainless steel may have a wide withstand voltage range of about -0.5V to about 5.5V and may be suitably used as the anode current collector 10 of a battery. In an implementation, an alloy such as an Al-Cu clad, which may withstand a potential in a wide range, may also be suitably used as the anode current collector 10.

The anode current collector 10 may be in the form of, e.g., a plate or foil.

The electrode structure 100 may further include, e.g., a thin film including an element capable of forming an alloy with lithium on the second portion 10b of the first surface 15 of the anode current collector 10. The thin film may be between the anode current collector 10 and the anode plate layer 20. The thin film may include, e.g., an element capable of forming an alloy with lithium. Elements that may form an alloy with lithium may include, e.g., gold, silver, zinc, tin, indium, silicon, aluminum, bismuth, or another suitable element capable of forming an alloy with lithium. The thin film may be configured or formed of one of these metals or an alloy of several kinds of metals. In an implementation, the thin film may be between the anode current collector 10 and the anode plate layer 20, e.g., a deposition form of an anode plate layer deposited between the thin film and the anode plate layer 20 may be further flattened, and the cycle characteristics of an all-solid-state secondary battery 1000 may further be improved.

A thickness of the thin film may be, e.g., about 1 nm to about 800 nm, about 10 nm to about 700 nm, about 50 nm to about 600 nm, or about 100 nm to about 500 nm. If the thickness of the thin film were to be less than 1 nm, it could be difficult to perform the function of the thin film. If the thickness of the thin film were to be too thick, the thin film itself could absorb lithium, which could result in a decrease in the amount of lithium deposition from an anode, and as a result, the energy density of the all-solid-state secondary battery 1000 could be lowered, and the cycle characteristics of the all-solid-state secondary battery 1000 could be reduced. The thin film may be disposed on the anode current collector 10 by, e.g., a vacuum deposition method, a sputtering method, a plating method, or a suitable method capable of forming a thin film.

### Elastic sheet

The elastic sheet 60 inside the folded structure of the anode current collector 10 may be in the form of a sheet including an elastic material.

In an implementation, the elastic material may include or consist of, e.g., polyurethane, natural rubber, spandex, isobutylene isoprene rubber (IIR), fluoroelastomer, elastomer, ethylene-propylene rubber (EPR), styrene-butadiene rubber (SBR), chloroprene, elastin, rubber epichlorohydrin, nylon, terpene, isoprene rubber, polybutadiene, nitrile rubber, thermoplastic elastomer, silicone rubber, ethylene-propylene-diene rubber (EPDM), ethylene vinyl acetate (EVA), halogenated butyl rubber, neoprene, copolymers thereof, or other suitable material having elasticity capable of absorbing a volume change of an anode electrode layer during charging and discharging the all-solid-state secondary battery 1000. In an implementation, the elastic sheet 60 may include a urethane material, e.g., polyurethane.

In an implementation, the elastic sheet 60 may include a urethane polymer sheet having a deformation rate in a range of about 30 to about 60 percent.

The elastic sheet 60 may be pressurized or pressed to have a thickness in a range of about 40 to about 90 percent of an original thickness before applying pressure during installation. In an implementation, when the elastic sheet 60 is installed, the elastic sheet 60 may be pressed to have a thickness in a range of about 50 to about 85% of the original thickness before applying pressure, e.g., in a range of about 60 to about 80 percent, or in a range of about 65 to about 75 percent of the original thickness before applying pressure. In the above range, it is possible to effectively absorb a change in the volume of an anode to smoothly charge and discharge an all-solid-state secondary battery.

The thickness of the elastic sheet 60 may be, e.g., about 200 to about 500 percent of the thickness of a lithium deposition layer of an anode formed during charging of the all-solid-state secondary battery 1000. In an all-solid-state secondary battery, a thickness of a lithium deposition layer of an anode may be determined in proportion to the current density of a cathode, e.g., the thickness of the lithium deposition layer of the anode may be determined according to the amount of lithium moving from the cathode to the anode, and thus, a volume change of the anode may occur. Therefore, it is possible to determine the thickness of the elastic sheet 60 so as to absorb the volume change of the anode. It is possible to effectively absorb a volume change of the anode by setting the thickness of the elastic sheet 60 in a range of about 200% to about 500% of the thickness of the lithium deposition layer of the anode formed during charging of the all-solid-state secondary battery 1000. In an implementation, the thickness of the elastic sheet 60 may be, e.g., in a range of about 250 to about 450 percent, or in a range of about 300 to about 400 percent of the thickness of the lithium deposition layer of the anode formed during charging of the all-solid-state secondary battery 1000.

The thickness of the elastic sheet 60 may be, e.g., about 50 µm to about 300 µm, about 100 µm to about 150 µm, about 200 µm to about 300 µm, or about 50 µm to about 100 µm.

In an implementation, the elastic sheet 60 may be inside the folded structure of the anode current collector 10 as described above, and it is possible to absorb a volume change due to a lithium deposition reaction used in the anode, thereby protecting the anode, and thus, the durability of the all-solid-state secondary battery 1000 may be improved.

### Cathode layer

As shown in FIG. 1, the first and second cathode plate layers 41 and 42 are on, in particular directly on, outer sides of the first and second solid electrolyte layers 31 and 32, respectively.

### Cathode plate layer: cathode active material

The cathode plate layer 40 may include, e.g., a cathode active material and a solid electrolyte. A solid electrolyte included in the cathode plate layer 40 may be similar to or different from the solid electrolyte included in the solid electrolyte layer 30. For details about the solid electrolyte, refer to the description of the solid electrolyte layer 30.

The cathode active material may reversibly absorb and desorb lithium ions. The cathode active material may include, e.g., lithium transition metal oxides such as lithium cobalt oxide (LCO), lithium nickel oxide, lithium nickel cobalt oxide, lithium nickel cobalt aluminum oxide (NCA), lithium nickel cobalt manganese oxide (NCM), lithium manganite, or lithium iron phosphate, nickel sulfide, copper sulfide, lithium sulfide, iron oxide, vanadium oxide, or another suitable cathode active material. The cathode active material may be used alone or a mixture of two or more thereof.

The lithium transition metal oxide may include, e.g., LiₐA1-bB_{b}D₂ (where 0.90 ≤ a ≤ 1, and 0 ≤ b ≤ 0.5); LiₐE₁-bB_{b}O₂-cD_{c} (where 0.90 ≤ a ≤ 1, 0 ≤ b ≤ 0.5, 0 ≤ c ≤ 0.05); LiE₂-bB_{b}O₄-cD_{c} (where 0 ≤ b ≤ 0.5, 0 ≤ c ≤ 0.05); LiₐNi1-b-cCo_{b}B_{c}D_{α} (where 0.90 ≤ a ≤ 1, 0 ≤ b ≤ 0.5, 0 ≤ c ≤ 0.05, 0 < α ≤ 2); LiₐNi1-b-cCo_{d}B_{c}O₂-αF_{α} (where 0.90 ≤ a ≤ 1, 0 ≤ b ≤ 0.5, 0 ≤ c ≤ 0.05, 0 < α < 2); LiₐNi1-b-cCo_{d}B_{c}O₂-αF₂ (where, 0.90 ≤ a ≤ 1, 0 ≤ b ≤ 0.5, 0 ≤ c ≤ 0.05, 0 < α < 2); LiₐNi1-b-cMn_{b}B_{c}D_{α} (where 0.90 ≤ a ≤ 1, 0 ≤ b ≤ 0.5, 0 ≤ c ≤ 0.05, 0 < α ≤ 2); LiₐNi1-b-cMn_{b}BcO₂-αF_{α} (where 0.90 ≤ a ≤ 1, 0 ≤ b ≤ 0.5, 0 ≤ c ≤ 0.05, 0 < α < 2); LiₐNi1-b-cMn_{d}BcO₂-αF₂ (where 0.90 ≤ a ≤ 1, 0 ≤ b ≤ 0.5, 0 ≤ c ≤ 0.05, 0 < α < 2); and LiₐNi_{d}E_{c}G_{d}O₂ (where 0.90 ≤ a ≤ 1, 0 ≤ b ≤ 0.9, 0 ≤ c ≤ 0.5, 0.001 ≤ d ≤ 0.1);LiₐNi_{d}Co_{c}Mn_{d}GeO₂ (where 0.90 ≤ a ≤ 1, 0 ≤ b ≤ 0.9, 0 ≤ c ≤ 0.5, 0 ≤ d ≤0.5, 0.001 ≤ e ≤ 0.1).; LiₐNiG_{b}O₂ (where 0.90 ≤ a ≤ 1, 0.001 ≤ b ≤ 0.1); LiₐCoG_{b}O₂ (where 0.90 ≤ a ≤ 1, 0.001 ≤ b ≤ 0.1); LiₐMnG_{b}O₂ (where 0.90 ≤ a ≤ 1, 0.001 ≤ b ≤ 0.1); LiₐMn₂G_{b}O₄ (where 0.90 ≤ a ≤ 1, 0.001 ≤ b ≤ 0.1); a compound represented by any one of chemical formulas of QO₂; QS₂; LiQS₂; V₂O₅; LiV₂O₅; LiIO₂; LiNiVO₄; Li(3-f)J₂(PO₄)₃ (0 ≤ f ≤ 2); Li(3-f)Fe₂(PO₄)₃ (0 ≤ f ≤ 2); LiFePO₄. In these compounds, A may be, e.g., Ni, Co, Mn, or a combination thereof; B may be, e.g., Al, Ni, Co, Mn, Cr, Fe, Mg, Sr, V, a rare earth element, or a combination thereof; D may be, e.g., O, F, S, P, or a combination thereof; E may be, e.g., Co, Mn, or a combination thereof; F may be, e.g., F, S, P, or a combination thereof; G may be, e.g., Al, Cr, Mn, Fe, Mg, La, Ce, Sr, V, or a combination thereof; Q may be, e.g., Ti, Mo, Mn, or a combination thereof; I may be, e.g., Cr, V, Fe, Sc, Y, or a combination thereof; and J may be, e.g., V, Cr, Mn, Co, Ni, Cu, or a combination thereof. A compound to which a coating layer is added to a surface thereof, or a mixture of the compound described above and a compound to which a coating layer is added may be used as the cathode active material. The coating layer added to the surface of such a compound may include, e.g., a compound of an oxide of a coating element, a hydroxide of a coating element, an oxyhydroxide of a coating element, an oxycarbonate of a coating element, or a hydroxycarbonate of a coating element. The compound constituting the coating layer may be amorphous or crystalline. The coating element included in the coating layer may include, e.g., Mg, Al, Co, K, Na, Ca, Si, Ti, V, Sn, Ge, Ga, B, As, Zr, or a mixture thereof. A method of forming a coating layer may be a suitable method that does not adversely affect the physical properties of the cathode active material. A coating method may include, e.g., spray coating, dipping, or the like.

The cathode active material may include, e.g., a lithium salt of a transition metal oxide having a layered rock salt type structure among the lithium transition metal oxides described above. The "layered rock salt structure" is a structure in which oxygen atomic layers and metal atomic layers are alternately and regularly arranged in a <111> direction of a cubic rock salt type structure, and as a result, each atomic layer forms a two-dimensional plane. The "cubic rock salt structure" refers to a sodium chloride type (NaCl type) structure, which is a type of crystal structure, e.g., a structure in which each of a cation and an anion that form a face centered cubic (fcc) lattice are shifted from each other by 1/2 of a ridge of the unit lattice. The lithium transition metal oxide having such a layered rock salt structure may include, e.g., a ternary lithium transition metal oxide such as LiNiₓCo_{y}Al_{z}O₂ (NCA), LiNiₓCo_{y}Mn_{z}O₂ (NCM) (0 < x < 1, 0 < y < 1, 0 < z < 1, x + y + z = 1), or the like. When the cathode active material includes a ternary lithium transition metal oxide having a layered rock salt structure, energy density and thermal stability of the all-solid-state secondary battery 1000 may be further improved.

The cathode active material may be covered by a coating layer as described above. The coating layer may be a suitable coating layer of a cathode active material of an all-solid-state secondary battery. The coating layer may include, e.g., Li₂O-ZrO₂ (LZO) or the like.

When the cathode active material includes nickel (Ni) as a ternary lithium transition metal oxide such as NCA or NCM, the capacity density of the all-solid-state secondary battery 1000 may be increased, and thus, it is possible to reduce metal elution of the cathode active material in a charging state. As a result, cycle characteristics of the all-solid-state secondary battery 1000 in a charging state are improved.

A shape of the cathode active material may be, e.g., a particle shape such as a true sphere or an elliptical sphere. A particle diameter of the cathode active material may be within a suitable range applicable to a cathode active material of an all-solid state secondary battery. The content of the cathode active material in a cathode layer may be within a suitable range applicable to a cathode layer of an all-solid-state secondary battery.

### Cathode plate layer: solid electrolyte

The cathode plate layer 40 may include, e.g., a solid electrolyte. The solid electrolyte included in the cathode plate layer 40 may be the same as or different from the solid electrolyte included in the solid electrolyte layer 30. For details about the solid electrolyte, refer to the description of the solid electrolyte layer 30.

The solid electrolyte included in the cathode plate layer 40 may have a smaller D50 average particle diameter than the solid electrolyte included in the solid electrolyte layer 30. In an implementation, a D50 average particle diameter of the solid electrolyte included in the cathode plate layer 40 may be, e.g., 90% or less, 80% or less, 70% or less, 60% or less, 50% or less, 40% or less, 30% or less, or 20% or less of the D50 average particle diameter of the solid electrolyte included in the solid electrolyte layer 30.

The D50 average particle diameter is a median particle diameter (D50). The median particle diameter (D50) denotes, e.g., a size of a particle corresponding to a 50% cumulative volume calculated from a particle side having a small particle size in a particle size distribution measured by a laser diffraction method.

### Cathode plate layer: binder

The cathode plate layer 40 may include a binder. The binder may include, e.g., styrene butadiene rubber (SBR), polytetrafluoroethylene, polyvinylidene fluoride, polyethylene, or other suitable binder.

### Cathode plate layer: conductive material

The cathode plate layer 40 may include a conductive material. The conductive material may include, e.g., graphite, carbon black, acetylene black, Ketjen black, carbon fiber, metal powder, or other suitable conductive material.

### Cathode plate layer: other additives

The cathode plate layer 40 may further include additives, e.g., a filler, a coating agent, a dispersing agent, an ion conductive auxiliary agent, or the like, in addition to the cathode active material described above, the solid electrolyte, the binder, and the conductive material.

As a filler, a coating agent, a dispersing agent, an ion conductive auxiliary agent, or the like, that the cathode plate layer 40 may include, suitable additives used for an electrode of an all-solid-state secondary battery may be used.

### Electrolyte layer

In an implementation, as shown in FIG. 1, an electrolyte layer may be on, in particular directly on, the cathode plate layer 40, thereby forming a unit cell including the electrode structure 100 and the solid electrolyte layer 30. In an implementation, the electrolyte layer may be a solid electrolyte layer 30.

### Solid electrolyte layer: solid electrolyte

The solid electrolyte may be, e.g., a sulfide solid electrolyte. The sulfide solid electrolyte may include, e.g., Li₂S-P₂S₅, Li₂S-P₂S₅-LiX, where X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn, where m and n are positive numbers, Z is one of Ge, Zn or Ga, Li₂S-GeS₂, Li₂S-SiS₂-Li₃PO₄, Li₂S-SiS₂-LiₚMO_{q}, where p and q are positive numbers, M is one of P, Si, Ge, B, Al, Ga, and In, Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. The sulfide solid electrolyte may be produced by treating a starting material, e.g., Li₂S, P₂S₅, or the like by using a melt quenching method or a mechanical milling method. In addition, after such treatment, a heat treatment may be performed. The solid electrolyte may be amorphous, crystalline, or a mixture thereof. In an implementation, the solid electrolyte may include, e.g., sulfur (S), phosphorus (P), and lithium (Li) as at least constituent elements among the sulfide solid electrolyte materials described above. For example, the solid electrolyte may include a material including Li₂S-P₂S₅. When using one material including Li₂S-P₂S₅ as a sulfide solid electrolyte material for forming the solid electrolyte, a mixing molar ratio of Li₂S and P₂S₅ may be, e.g., Li₂S: P₂S₅=about 50:50 to about 90:10.

The sulfide solid electrolyte may include, e.g., an argyrodite type solid electrolyte represented by the following Chemical Formula 1.

Chemical Formula 1 Li⁺¹₂₋ₙ₋ₓAⁿ⁺X²⁻₆₋ₓY⁻ₓ

In Chemical Formula 1, A may be, e.g., P, As, Ge, Ga, Sb, Si, Sn, Al, In, Ti, V, Nb or Ta. X may be, e.g., S, Se, or Te. Y may be, e.g., Cl, Br, I, F , CN, OCN, SCN, or N₃. 1≤n≤5 and 0≤x≤2. The sulfide solid electrolyte may be a compound of an argyrodite-type including, e.g., Li₇₋ₓPS₆₋ₓClₓ, 0≤x≤2, Li₇₋ₓPS₆₋ₓBrₓ, 0≤x≤2, and Li₇-xPS₆-xIₓ, 0≤x≤2. The sulfide solid electrolyte may be, e.g., an argyrodite-type compound including e.g., Li₆PS₅Cl, Li₆PS₅Br, or Li₆PS₅I.

The density of the argyrodite-type solid electrolyte may be, e.g., about 1.5 g/cc to about 2.0 g/cc. In an implementation, the argyrodite-type solid electrolyte may have a density of , e.g., about 1.5 g/cc or more, an internal resistance of an all-solid-state secondary battery may be reduced, and the penetration of a solid electrolyte layer by Li may be effectively suppressed.

### Solid electrolyte layer: binder

The solid electrolyte layer may include, e.g., a binder. A binder included in the solid electrolyte layer may include, e.g., styrene butadiene rubber (SBR), polytetrafluoroethylene, polyvinylidene fluoride, polyethylene, or other suitable binder. The binder of the solid electrolyte layer may be the same as or different from the binder included in the cathode plate layer 40 and the anode plate layer 20. In an implementation, the binder may be omitted.

A content of the binder included in the solid electrolyte layer may be in a range of, e.g., about 0 wt% to about 10 wt%, about 0 wt% to about 5 wt%, about 0 wt% to about 3 wt%, about 0 wt% to about 1 wt%, about 0 wt% to about 0.5 wt%, or about 0 wt% to about 0.1 wt%, based on a total weight of the solid electrolyte layer.

### Anode layer

As shown in FIG. 1, in the electrode structure 100, the anode plate layer 20 may be on, in particular directly on, the first and second portions 10a and 10b of the first surface 15 of the anode current collector 10.

Anode plate layer: anode active material

The anode plate layer 20 may include, e.g., an anode active material and a binder.

The anode active material included in the anode plate layer 20 may have, e.g., a particle shape. An average particle diameter of the anode active material having a particle shape may be, e.g., 4 µm or less, 3 µm or less, 2 µm or less, 1 µm or less, or 900 nm or less. An average particle diameter of the anode active material having a particle shape may be, e.g., in a range of about 10 nm to about 4 µm or less, about 10 nm to about 3 µm or less, about 10 nm to about 2 µm or less, about 10 nm to about 1 µm or less, or about 10 nm to about 900 nm or less. When the anode active material has an average particle diameter in these ranges, reversible absorbing and/or desorbing of lithium during charging and discharging may be easier. An average particle diameter of the anode active material may be, e.g., a median diameter (D50) measured using a laser particle size distribution meter.

The anode active material included in the anode plate layer 20 may include, e.g., a carbon anode active material or a metal or metalloid anode active material.

In an implementation, the carbon anode active material may be, e.g., amorphous carbon. The amorphous carbon may include, e.g., carbon black (CB), acetylene black (AB), furnace black (FB), ketjen black (KB), graphene, or other suitable amorphous carbon. Amorphous carbon is carbon having no crystallinity or having very low crystallinity, and may be distinguished from crystalline carbon or graphite carbon.

Metal or metalloid anode active material may include, e.g., gold (Au), platinum (Pt), palladium (Pd), silicon (Si), silver (Ag), aluminum (Al), bismuth (Bi), tin (Sn), zinc (Zn), or other suitable metal anode active material or metalloid anode active material that forms an alloy or compound with lithium. Nickel (Ni) does not form an alloy with lithium, and may not be used as a metal anode active material.

The anode plate layer 20 may include a kind of anode active material from among these anode active materials, or include a mixture of a plurality of different anode active materials. In an implementation, the anode plate layer 20 may include only amorphous carbon, or Au, Pt, Pd, Si, Ag, Al, Bi, Sn, or Zn. In an implementation, the anode plate layer 20 may include a mixture of amorphous carbon and Au, Pt, Pd, Si, Ag, Al, Bi, Sn, or Zn. A mixing ratio of the mixture of amorphous carbon and Au may be, e.g., 10:1 to 1:2, 5:1 to 1:1, or 4:1 to 2:1 as a weight ratio, or may be selected according to desired characteristics of the all-solid-state secondary battery 1000. Cycle characteristics of the all-solid-state secondary battery 1000 may be further improved by the anode active material having such a composition.

The anode active material included in the anode plate layer 20 may include, e.g., a mixture of first particles including amorphous carbon and second particles including metals or metalloids. Metals or metalloids may include, e.g., Au, Pt, Pd, Si, Ag, Al, Bi, Sn, or Zn. In an implementation, metalloids may otherwise be semiconductors. The content of the second particles may be, e.g., in a range of about 8% to about 60% by weight, about 10% to about 50 % by weight, about 15% to about 40% by weight, or about 20% to about 30% by weight based on the total weight of the mixture. When the second particle has a content in these ranges, e.g., the cycle characteristics of the all-solid-state secondary battery 1000 may further be improved.

### Anode plate layer: binder

The binder included in the anode plate layer 20 may be, e.g., styrene-butadiene rubber (SBR), polytetrafluoroethylene, polyvinylidene fluoride, polyethylene, vinylidene fluoride/hexafluoropropylene copolymer, polyacrylonitrile, polymethyl methacrylate, or other suitable binder. The binder may be configured of a single or a plurality of different binders from each other.

In an implementation, the anode plate layer 20 may include the binder, and the anode plate layer 20 may be stabilized on the anode current collector 10. In an implementation, cracking of the anode plate layer 20 may be suppressed despite a change in volume and/or a relative position change of the anode plate layer 20 in a charging/discharging process. In an implementation, if the anode plate layer 20 did not include a binder, the anode plate layer 20 could be easily separated from the anode current collector 10. If the anode current collector 10 were to be exposed due to the separation of the anode plate layer 20 from the anode current collector 10, the anode current collector 10 could contact the solid electrolyte layer 30, thus, the possibility of causing a short circuit could increase. The anode plate layer 20 may be manufactured by, e.g., applying a slurry, in which a material constituting the anode plate layer 20 is dispersed, on the anode current collector 10, respectively, and drying the slurry. By including the binder in the anode plate layer 20, stable dispersion of an anode active material in the slurry is possible. In an implementation, when the slurry is applied on the anode current collector 10 by using a screen printing method, clogging of a screen (e.g., clogging by an agglomerate of the anode active material) may be suppressed.

### Anode plate layer: other additives

The anode plate layer 20 may further include suitable additives for an all-solid-state secondary battery, e.g., a filler, a coating agent, a dispersing agent, an ion conductive auxiliary agent, or the like.

### Anode layer: anode plate layer

The thickness of the anode plate layer 20 may be, e.g., 50% or less, 40% or less, 30% or less, 20% or less, 10% or less, or 5% or less of the thickness of the cathode plate layer 40 . The thickness of the anode plate layer 20 may be, e.g., in a range of about 1 µm to about 20 µm, about 2 µm to about 10 µm, or about 3 µm to about 7 µm. If the thickness of the anode plate layer 20 were to be too small, lithium dendrites formed between the anode plate layer 20 and the anode current collector 10 could break down the anode plate layer 20, and thus, it could be difficult to improve the cycle characteristics of the all-solid-state secondary battery 1000. If the thickness of the anode plate layer 20 were to be excessively large, energy density of the all-solid-state secondary battery 1000 could be reduced and an internal resistance of the all-solid-state secondary battery 1000 due to the anode plate layer 20 could be increased, and thus, it could be difficult to improve the cycle characteristics of the all-solid-state secondary battery 1000.

If the thickness of the anode plate layer 20 were to be reduced, e.g., the charging capacity of the anode plate layer 20 could also decrease. The charging capacity of the anode plate layer 20 may be, e.g., 50% or less, 40% or less, 30% or less, 20% or less, 10% or less, 5% or less, or 2% or less compared to the charging capacity of the cathode plate layer 40. The charging capacity of the anode plate layer 20 may be, e.g., in a range of about 0.1% to about 50%, about 0.1% to about 40%, about 0.1% to about 30%, about 0.1% to about 20%, about 0.1% to about 10%, about 0.1% to about 5%, or about 0.1% to about 2% compared to the charging capacity of the cathode plate layer 40. If the charging capacity of the anode plate layer 20 were to be too small, the thickness of the anode plate layer 20 could become very thin, so lithium dendrites formed between the anode plate layer 20 and the anode current collector 10 in repeated charging and discharging processes could break down the anode plate layer 20, and thus, it could be difficult to improve the cycle characteristics of the all-solid-state secondary battery 1000. If the charging capacity of the anode plate layer 20 were to be excessively large, the energy density of the all-solid-state secondary battery 1000 could be lowered and the internal resistance of the all-solid-state secondary battery 1000 could increase due to the anode plate layer 20, and thus, it could be difficult to improve the cycle characteristics of the all-solid-state secondary battery 1000.

The charging capacity of the cathode plate layer 40 may be obtained by multiplying a charging capacity density (mAh/g) of a cathode active material by a mass of the cathode active material in the cathode plate layer 40. When several types of cathode active materials are used, a charge capacity density × mass value may be calculated for each cathode active material, and the sum of these values may be the charge capacity of the cathode plate layer 40. The charging capacity of the anode plate layer 20 may be calculated in the same way. In an implementation, the charging capacity of the anode plate layer 20 may be obtained by multiplying a charge capacity density (mAh/g) of the anode active material by a mass of the anode active material in the anode plate layer 20. When several types of anode active materials are used, a charge capacity density × mass value may be calculated for each anode active material, and the sum of these values is the capacity of the anode plate layer 20. In an implementation, the charge capacity density of the cathode active material and the anode active material may be a capacity estimated using an all-solid-state half-cell using lithium metal as a counter electrode. The charging capacity of the cathode plate layer 40 and the anode plate layer 20 may be directly measured by measuring the charging capacity using an all-solid-state half-cell. When the measured charge capacity is divided by the mass of each active material, a charging capacity density may be obtained. In an implementation, the charging capacity of the cathode plate layer 40 and the anode plate layer 20 may be an initial charging capacity measured during the first cycle of charging.

### Anode Layer: Deposition Anode Plate Layer (Deposition Layer)

In an implementation, the all-solid-state secondary battery 1000 may further include a deposited anode plate layer, e.g., between the anode current collector 10 and the anode plate layer 20, as a result of charging. The deposited anode plate layer may be a metal layer including lithium or a lithium alloy. The metal layer may include lithium or a lithium alloy. In an implementation, the deposited anode plate layer may be a metal layer including lithium, and thus, may perform, e.g., as a lithium reservoir. The lithium alloy may include, e.g., a Li-Al alloy, a Li-Sn alloy, a Li-In alloy, a Li-Ag alloy, a Li-Au alloy, a Li-Zn alloy, a Li-Ge alloy, a Li-Si alloy, or other suitable lithium alloy. The deposited anode plate layer may include one of these alloys or lithium, or include several kinds of alloys.

In an implementation, a thickness of the deposited anode plate layer may be, e.g., about 1 µm to about 1,000 µm, about 1 µm to about 500 µm, about 1 µm to about 200 µm, about 1 µm to about 150 µm, about 1 µm to about 100 µm, or about 1 µm to about 50 µm. If the thickness of the deposited anode plate layer were to be too small, it could be difficult to perform the role of a lithium reservoir by the deposited anode plate layer. If the thickness of the deposited anode plate layer were to be too large, the mass and volume of the all-solid-state secondary battery could increase and cycle characteristics could be rather deteriorated. The deposited anode plate layer may be, e.g., a metal foil having a thickness in the range described above.

In the all-solid-state secondary battery 1000, the deposited anode plate layer may be, e.g., between the anode current collector 10 and the anode plate layer 20 before assembling the all-solid-state secondary battery 1000 or deposited between the anode current collector 10 and the anode plate layer 20 by charging after assembly of the all-solid-state secondary battery 1000. When the deposited anode plate layer is between the anode current collector 10 and the anode plate layer 20 before assembling the all-solid-state secondary battery 1000, the deposited anode plate layer may be a metal layer including lithium, and the deposited anode plate layer may perform as a lithium storage (reservoir). In an implementation, a lithium foil may be between the anode current collector 10 and the anode plate layer 20 before assembly of the all-solid-state secondary battery 1000. Accordingly, the cycle characteristics of the all-solid-state secondary battery 1000 including the deposited anode plate layer may further be improved. When the deposited anode plate layer is deposited by charging after assembling the all-solid-state secondary battery 1000, the deposited anode plate layer may not be included when assembling the all-solid-state secondary battery 1000, thus, the energy density of the all-solid-state secondary battery 1000 may increase. In an implementation, when charging the all-solid-state secondary battery 1000, the anode plate layer 20 may be charged in excess of a charging capacity thereof. In an implementation, the anode plate layer 20 may be overcharged. At the initial stage of charging, lithium may be absorbed in the anode plate layer 20. An anode active material included in the anode plate layer 20 may form an alloy or compound with lithium ions that have migrated from the cathode plate layer 40. When charging exceeds the capacity of the anode plate layer 20, e.g., lithium may be deposited on a rear surface of the anode plate layer 20, e.g., between the anode current collector 10 and the anode plate layer 20, and a metal layer corresponding to the deposited anode plate layer may be formed by deposited lithium. The deposited anode plate layer may be a metal layer mainly including lithium (e.g., metallic or non-compounded lithium). Such a result may be obtained, e.g., because the anode active material included in the anode plate layer 20 includes a material that forms an alloy or compound with lithium. During discharging, lithium in the anode plate layer 20 and the deposited anode plate layer, e.g., the metal layer may be ionized and may move in a direction towards the cathode plate layer 40. Accordingly, it is possible to use lithium as an anode active material in the all-solid-state secondary battery 1000. In an implementation, the anode plate layer 20 may cover the precipitated anode plate layer, the anode plate layer 20 may serve as a protective layer for the deposited anode plate layer, e.g., the metal layer, and may help inhibit the deposition growth of lithium dendrites. In an implementation, the deposited anode plate layer may help suppress a short circuit and a decrease in capacity of the all-solid-state secondary battery 1000, and as a result, cycle characteristics of the all-solid-state secondary battery 1000 may be improved. In addition, when the deposited anode plate layer is formed by charging after assembly of the all-solid-state secondary battery 1000, the anode current collector 10, and the anode plate layer 20, and a region between them may be, e.g., Li-free regions that do not include lithium (Li) in an initial state or after discharge state of the all-solid-state secondary battery 1000.

### All-solid-state secondary battery

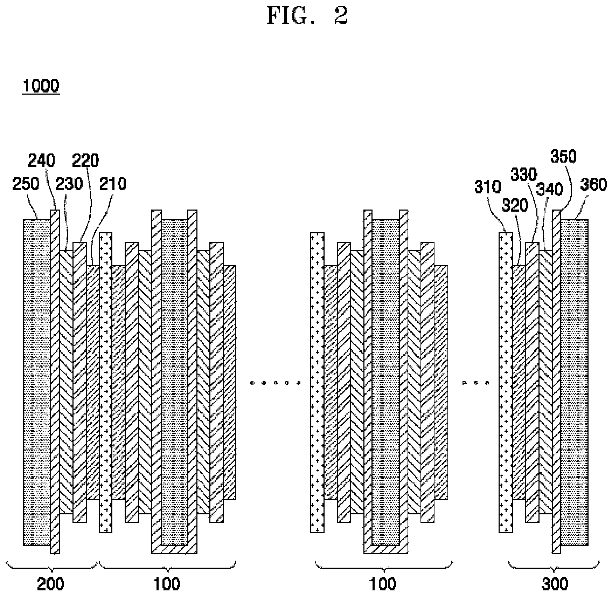

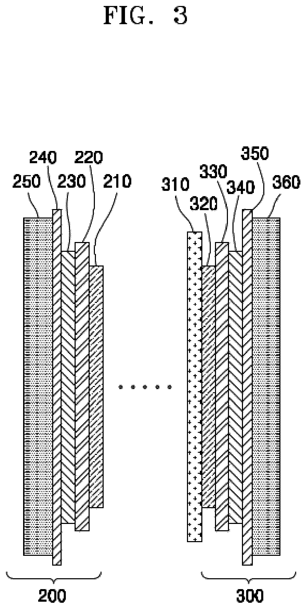

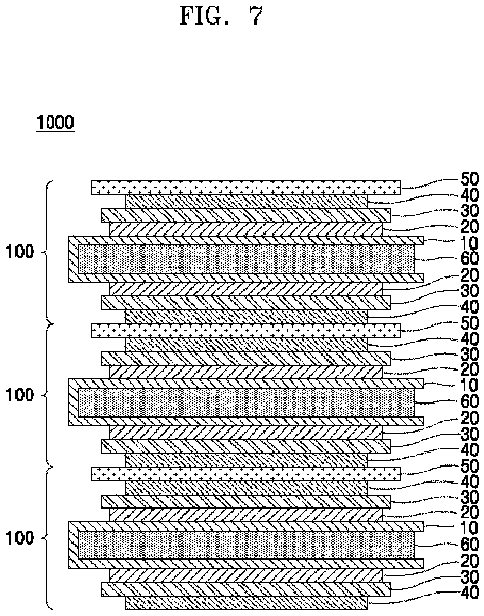

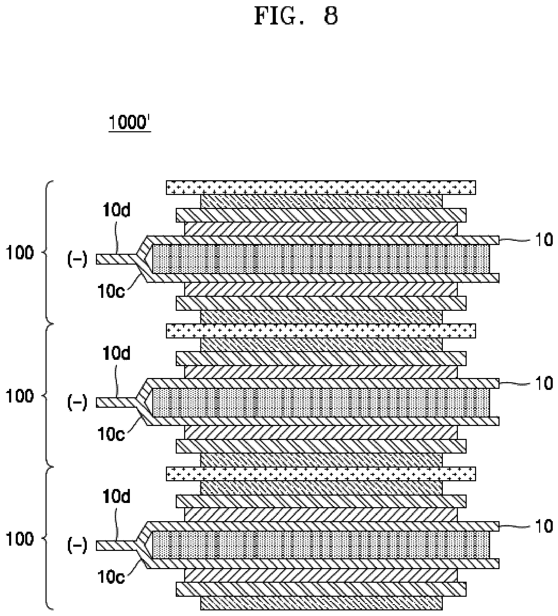

FIG. 2 is a cross-sectional view illustrating an all-solid-state secondary battery in which an electrode structure is stacked, according to an embodiment. FIG. 3 is a cross-sectional view illustrating first and second outermost stacks among all-solid-state secondary batteries according to an embodiment. FIG. 7 is a diagram illustrating an electrode structure stack in which a plurality of electrode structures of an all-solid-state secondary battery are stacked, according to an embodiment. Reference numerals shown in FIG. 7 may be equally applied to the same configuration shown in FIGS. 8 to 10.

As shown in FIG. 7, the all-solid-state secondary battery 1000 includes an electrode structure stack in which a plurality of electrode structures 100 are stacked.

Also, referring to FIGS. 2 and 3, the all-solid-state secondary battery 1000 may further include a first outermost stack 200 at one end of the electrode structure stack and a second outermost stack 300 at another end of the electrode structure stack.

In the first outermost stack 200, a cathode plate layer 210, a solid electrolyte layer 220, an anode plate layer 230, an anode current collector 240, and an elastic sheet 250 may be sequentially stacked toward an outer direction of (e.g., outwardly in) the all-solid-state secondary battery 1000. In an implementation, in the second outermost stack 300, a cathode current collector 310, a cathode plate layer 320, a solid electrolyte layer 330, an anode plate layer 340, an anode current collector 350, and an elastic sheet 360 may be sequentially stacked toward the outer direction of the all-solid-state secondary battery 1000.

An embodiment of the present disclosure relates to the electrode structure 100 and a structure in which the electrode structures 100 are stacked in the all-solid-state secondary battery 1000. In order to realize a high-capacity all-solid-state secondary battery 1000, cathodes and anodes may be stacked. The all-solid-state secondary battery 1000 according to an embodiment may implement a simple manufacturing process while introducing the elastic sheet 60 capable of absorbing a volume expansion of an anode layer during charging and discharging of the all-solid-state secondary battery 1000.

In an implementation, the electrode structure 100 inside the electrode structure stack may have a structure having two cathode plate layers 40 and a single anode current collector 10. In an implementation, the anode current collector 10 may have the folded structure, and the electrode structure 100 may have an effect that two cathode plate layers 40 and two anode current collectors are arranged. As described above, an all-solid-state secondary battery structure that includes the elastic sheet 60 capable of absorbing a volume change of an anode while enabling a pressurization form that maximizes the binding of materials, e.g., hydrostatic press (WIP) or the like, may be implemented through a structure in which the cathode current collector 50 and the elastic sheet 60 are additionally disposed during implementation of an electrode structure as a stack structure.

In an implementation, the all-solid-state secondary battery 1000 according an embodiment may have a form in which the anode current collector 10 facing the elastic sheet 60 is folded roughly in half to substantially implement the anode as one sheet, and thus, the manufacturing process of the all-solid-state secondary battery 1000 may be simplified, and an alignment of the all-solid-state secondary battery 1000 during the manufacturing process may be facilitated. Through this process, it is possible to achieve simplification of the current collector.

Some secondary batteries may be manufactured as a bicell in which an anode, an electrolyte, a cathode, an electrolyte, and an anode are sequentially stacked. When a pressurization process is performed in this form, the insertion of a gasket capable of compensating for a difference in area between a cathode layer and an electrolyte layer may be used due to the cathode layer positioned therebetween and having the smallest area. Therefore, a process of inserting a gasket into a space between the electrolyte layer and the cathode layer may be performed. A process of aligning the gasket, the electrolyte layer, and the cathode layer may also be difficult, the gasket may not contribute to the capacity of the secondary battery but occupies a volume, and because the configuration of the gasket is additionally required, the gasket may remain as an unnecessary configuration. Also, if the alignment of the gasket is not properly achieved, electrolyte cracking could occur.

In addition, even if the gasket is inserted, a surface of the anode may be curved due to a non-uniform thickness between the gasket and the anode layer after performing a bicell pressurization process.

Thus, according to an embodiment, the anode current collector 10, the anode plate layer 20, the solid electrolyte layer 30, and the cathode plate layer 40 may be sequentially stacked, and when a pressing process is performed, the pressing process may be performed in a state that the cathode plate layer 40 having the smallest area among the components is located at the top. Therefore, it may be unnecessary to insert a gasket between the electrolyte layer and the cathode layer, and there may be an advantage that the breakdown of the electrolyte by the gasket may not occur. The cathode current collector 50 may be separately attached to the electrode structure after the pressing process is completed, and damage to the secondary battery due to the pressing process may not occur. In an implementation, the cathode current collector 50 may be attached to the electrode structure 100 by coating a cathode plate layer on, in particular directly on, the cathode current collector during a pressing process.

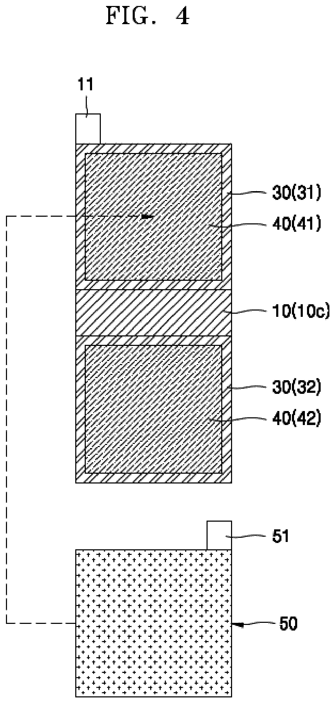

FIG. 4 is a front exploded view of a stack in which an anode current collector 10, a solid electrolyte layer 30, and a cathode plate layer 40 are stacked as viewed in a stacking direction and a cathode current collector 50 to be stacked on, in particular directly on, the cathode plate layer 40 in an all-solid-state secondary battery according to an embodiment of the present disclosure.

Referring to FIG. 4, the anode current collector 10 of the electrode structure 100 may include an anode tab 11 protruding from the anode current collector 10. In addition, the cathode current collector 50 of the electrode structure 100 may include a cathode tab 51 protruding from the cathode current collector 50. In an implementation, protruding directions of the anode tab 11 and the cathode tab 51 may be parallel to each other (e.g., the anode tab 11 and the cathode tab 51 may extend lengthwise in a same direction).

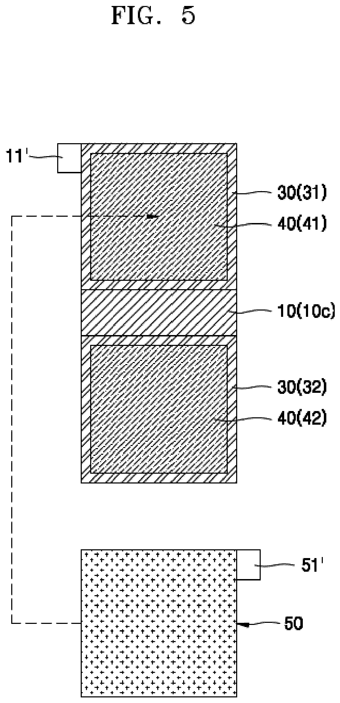

FIG. 5 is an exploded front view of a stack in which an anode current collector 10, a solid electrolyte layer 30, and a cathode plate layer 40 are stacked as viewed in a stacking direction and a cathode current collector 50 to be stacked on, in particular directly on, the cathode plate layer 40 in an all-solid-state secondary battery according to another embodiment of the present disclosure.

Referring to FIG. 5, the anode current collector 10 of the electrode structure 100 may include an anode tab 11' protruding from the anode current collector 10. In addition, the cathode current collector 50 of the electrode structure 100 may include a cathode tab 51' protruding from the cathode current collector 50. In an implementation, the protruding directions of the anode tab 11' and the cathode tab 51' may be opposite to each other (e.g., the anode tab 11' and the cathode tab 51' may extend in opposite, but still parallel, directions).

If the anode structure were not an electrode structure in a state of being folded in half, it could have the form in which two separate anode current collectors are formed during the manufacturing process, and thus, each current collector would need an anode tab. However, in the case of the anode current collector 10 folded in half, e.g., as in the present embodiments, only one anode tab may be formed as described below, even in a situation when the number of stacked layers of the stack increases, the number of anode tabs may be reduced by half compared to the case of separate anode current collectors, and thus, welding of the anode tab may be easy and it may be economical in terms of volume.

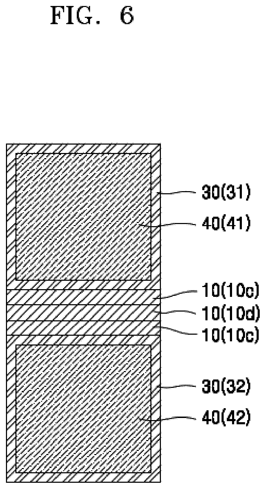

FIG. 6 is an exploded front view of a stack in which an anode current collector, a solid electrolyte layer, and a cathode plate layer are stacked in an all-solid-state secondary battery 1000' according to another embodiment of present the disclosure. FIG. 8 is a diagram illustrating a state in which a plurality of electrode structures are stacked in the all-solid-state secondary battery 1000' according to another embodiment of the present disclosure.

Referring to FIGS. 6 and 8, in the all-solid-state secondary battery 1000' according to another embodiment, an anode tab 10d may be in or on, in particular directly on, the middle portion 10c of the anode current collector 10 of the electrode structure 100. In this way, in addition to the embodiment in which the anode tab 11 (11') is formed at the end of the anode current collector 10 as shown in FIGS. 4 and 5, as in the present embodiment, the anode tab 10d may be formed in or on, in particular directly on, the middle portion 10c of the anode current collector 10. The anode tab 10d may protrude from the middle portion 10c of the anode current collector 10 as shown in FIG. 8.

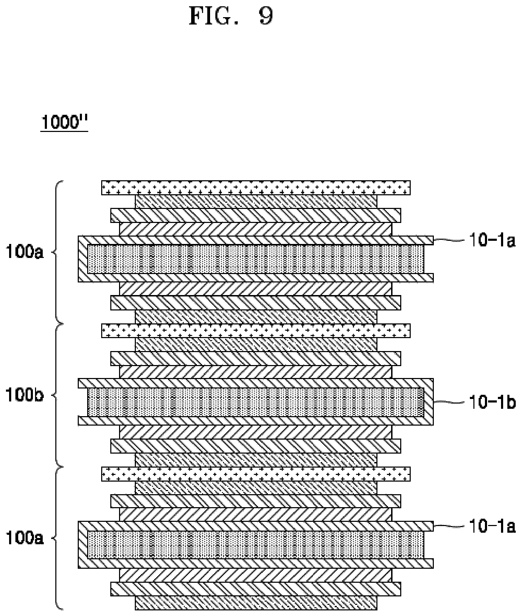

FIG. 9 is a diagram showing a state in which a plurality of electrode structures are stacked in an all-solid-state secondary battery 1000" according to another embodiment of the present disclosure.

Referring to FIG. 9, in the all-solid-state secondary battery 1000" according to another embodiment of the present disclosure, folding directions of two anode current collectors 10-1a and 10-1b, which are included in first and second electrode structures 100a and 100b that are in contact with each other among the plurality of electrode structures 100, may be opposite to each other.

In the present embodiment, the anode current collectors 10-1a and 10-1b having the folding directions opposite to each other may be alternately stacked, and the connection direction of the anode tab connected to the anode collector may be applied to be suitable for a structure of an all-solid-state secondary battery.

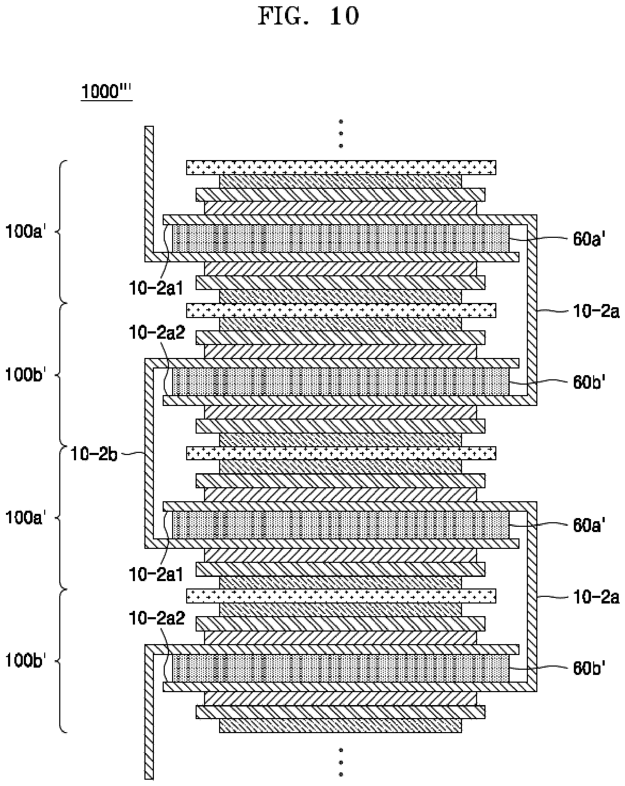

FIG. 10 is a diagram showing a state in which a plurality of electrode structures are stacked in an all-solid-state secondary battery 1000‴ according to another embodiment of the present disclosure.

Referring to FIG. 10, the all-solid-state secondary battery 1000‴ according to another embodiment of the present disclosure may include a plurality of anode current collectors 10-2a having a folded structure so that first and second elastic sheets 60a' and 60b' respectively included in first and second electrode structures 100a' and 100b' which are in contact with each other are accommodated therein.

In an implementation, each of the plurality of anode current collectors 10-2a may include two opposite inner surfaces 10-2a1 and 10-2a2, and the first and second elastic sheets 60a' and 60b' may contact (e.g., directly contact) each of the two inner surfaces 10-2a1 and 10-2a2 of the plurality of anode current collectors 10-2a.

By way of summation and review, in manufacturing an all-solid-state secondary battery an injection process of a liquid electrolyte may not be performed, and all components may be stacked layer by layer. A mechanical pressing process may be performed to overcome interfacial resistance of each layer. The pressing process may be performed to help overcome the interfacial resistance of the all-solid-state secondary battery through various pressing processes, e.g., uniaxial pressing, a tip pressing type roll press, a cold isostatic press (CIP), or a warm isostatic press (WIP).

In the structure of an all-solid-state secondary battery in which layers are simply stacked, it could be difficult to address various issues that could occur during a pressurization process for realizing the stacking technology of the all-solid-state secondary battery.

One of features of an all-solid-state secondary battery, unlike a general lithium-ion battery, is that it may easily build a bi-polar structure, and thus, it may have the advantage of enabling the development of cells having high output and high energy density with a high voltage because a large current flows easily. It could be difficult to design a structure capable of absorbing a volume change due to a lithium deposition reaction used in an anode of an all-solid-state secondary battery with a bipolar structure in which the electrodes are arranged in series.

One or more embodiments may provide an electrode structure capable of absorbing a volume change of an anode in an all-solid-state secondary battery.

As described above, through various all-solid-state secondary battery structures between the elastic sheet and the anode current collector, the anode layer may be protected during a manufacturing process, alignment may be simplified, and surface bending due to pressing may be prevented in advance, and thus, the quality of the all-solid-state secondary battery may be improved.

The electrode structure according to an embodiment of the present disclosure may absorb a change in volume of an anode through the elastic sheet and protect a surface bending due to pressing, thereby improving the durability of the all-solid-state secondary battery.

In addition, the all-solid-state secondary battery including an electrode structure according to an embodiment of the present disclosure may not require a separate gasket during a pressurization process, and thus, the pressurization process may be simplified and bending due to the gasket may not occur during the pressurization process, thereby improving the process quality.

The effects of the present disclosure are not limited to the above-mentioned effects, and other effects not mentioned will be clearly understood by those skilled in the art from the description of the claims.

Specific technical content described in the embodiment is an embodiment and does not limit the technical scope of the embodiment. In order to concisely and clearly describe the embodiments, descriptions of general techniques of the related art and configurations may be omitted.

Also, the connections of lines and connection members between constituent elements depicted in the drawings are examples of functional connection and/or physical or circuitry connections, and thus, in practical devices, may be expressed as replaceable or additional functional connections, physical connections, or circuitry connections.

As used herein, "above" or similar directional terms may be applied to both singular and plural unless otherwise specified. In addition, when the term "range" is described, it includes an individual value belonging to the range (unless otherwise described), and in the detailed description, it is equal to describe an individual value that constitutes the "range".

In addition, with respect to operations that constitute a method, the operations may be performed in any appropriate sequence unless the sequence of operations is clearly described or unless the context clearly indicates otherwise.

The operations may not necessarily be performed in the order of sequence. All examples or example terms (for example, etc.) are simply used to explain in detail the technical scope of the embodiments, and thus, the scope of the embodiments is not limited by the examples or the example terms as long as it is not defined by the claims.

In addition, it should be understood by those of ordinary skill in the art that the embodiments may be configured according to design conditions and facts within the claims to which various modifications, combination, and revisions may be added.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing scope of the present invention as set forth in the following claims.

## Claims

1. An electrode structure (100), comprising:
an anode current collector (10) having a first surface (15) and a second surface (16), the first surface (15) including a first portion (10a), a second portion (10b), and a middle portion (10c) between the first portion (10a) and the second portion (10b), the first portion (10a) and the second portion (10b) being oriented to face outwardly in opposite directions with the middle portion (10c) therebetween, and the anode current collector (10) being folded such that the second surface (16) faces inwardly in the anode current collector (10);
a first anode plate layer (21) on the first portion (10a) of the first surface (15);
a second anode plate layer (22) on the second portion (10b) of the first surface (15);
a first solid electrolyte layer (31) on an outer side of the first anode plate layer (21);
a second solid electrolyte layer (32) on an outer side of the second anode plate layer (22);
a first cathode plate layer (41) on an outer side of the first solid electrolyte layer (31);
a second cathode plate layer (42) on an outer side of the second solid electrolyte layer (32); and
an elastic sheet (60) inside an interior space of the folded anode current collector (10),
**characterized in that**
the elastic sheet (60) is configured to compensate for a volume change of the anode plate layers (21, 22) during charging and discharging.

2. The electrode structure (100) of claim 1, wherein the elastic sheet (60) includes a urethane polymer sheet having a deformation rate in a range of about 30% to about 60%.

3. The electrode structure (100) of claim 1 or 2, further comprising a cathode current collector (50) on an outer side of the first cathode plate layer (41) or the second cathode plate layer (42).

4. The electrode structure (100) of any of the preceding claims, wherein the anode current collector (10) includes stainless steel.

5. The electrode structure (100) of any of the preceding claims, wherein the second surface (16) and the middle portion (10c) of the first surface (15) are uncoated regions.

6. The electrode structure (100) of any of the preceding claims, wherein the first anode plate layer (21) and/or the second anode plate layer (22) include a cathode active material including a ternary lithium transition metal oxide having a layered rock salt structure.

7. The electrode structure (100) of any of the preceding claims, wherein the first cathode plate layer (41) and/or the second cathode plate layer (42) include an anode active material including a mixture of first particles including amorphous carbon and second particles including metals or metalloids.

8. The electrode structure (100) of claim 7, wherein the content of the second particles are in a range of about 8% to about 60% by weight based on the total weight of the mixture.

9. An all-solid-state secondary battery (1000, 1000', 1000'', 1000‴) comprising an electrode structure stack in which a plurality of electrode structures (100) of any one of the preceding claims are stacked.

10. The all-solid-state secondary battery (1000) of claim 9, further comprising:
a first outermost stack (200) at one end of the electrode structure stack and including a sequentially stacked cathode plate layer (210), solid electrolyte layer (220), anode plate layer (230), anode current collector (240), and elastic sheet (250), and
a second outermost stack (300) at another end of the electrode structure stack and including a sequentially stacked cathode current collector (310), cathode plate layer (320), solid electrolyte layer (330), anode plate layer (340), anode current collector (350), and elastic sheet (360).

11. The all-solid-state secondary battery (1000) of claim 9 or 10, wherein:
the electrode structure (100) further includes a cathode current collector (50) thereon,
the anode current collector (10) of the electrode structure (100) includes an anode tab (11) protruding therefrom,
the cathode current collector (50) of the electrode structure (100) includes a cathode tab (51) protruding therefrom, and
the anode tab (11) protrudes in a same protrusion direction as a protrusion direction of the cathode tab (51).

12. The all-solid-state secondary battery (1000) of claim 9 or 10, wherein:
the electrode structure (100) further includes a cathode current collector (50) thereon,
the anode current collector (10) of the electrode structure (100) includes an anode tab (11) protruding therefrom,
the cathode current collector (50) of the electrode structure (100) includes a cathode tab (51) protruding therefrom, and
the anode tab (11) protrudes in a protrusion direction that is opposite to and parallel with a protrusion direction of the cathode tab (51).

13. The all-solid-state secondary battery (1000') of any of the claims 9 to 12, wherein the anode current collector (10) of the electrode structure (100) includes an anode tab (10d) on the middle portion (10c) thereof.

14. The all-solid-state secondary battery (1000") of any of the claims 9 to 13, wherein:
the plurality of electrode structures (100) includes a first electrode structure (100a) in contact with a second electrode structure (100b), and
a folding direction of the anode current collector (10-1a) of the first electrode structure (100a) is opposite to a folding direction of the anode current collector (10-1b) of the second electrode structure (100b) such that an opening of the folded anode current collector (10-1a) of the first electrode structure (100a) opens in a direction opposite to an opening of the folded anode current collector (10-1b) of the second electrode structure (100b).

15. The all-solid-state secondary battery (1000‴) of any of the claims 9 to 14, wherein:
the plurality of electrode structures (100) includes a first electrode structure (100a') in contact with a second electrode structure (100b'),
the first portion (10-2a1) of the first surface (100a') of the anode current collector (10-2a) of the first electrode structure (100a') and the second portion (10-2a2) of the first surface (15) of the anode current collector (10-2a) of the second electrode structure (100b') contact and accommodate the elastic sheet (60a') of the first electrode structure (100a') therebetween, and
the second portion (10-2a2) of the first surface (15) of the anode current collector (10-2a) of the first electrode structure (100a') and the first portion (10-2a1) of the first surface (15) of the anode current collector (10-2a) of the second electrode structure (100b') contact and accommodate the elastic sheet (60b') of the second electrode structure (100b') therebetween.

## Patentansprüche

1. Elektrodenstruktur (100), umfassend:
einen Anodenstromabnehmer (10), der eine erste Fläche (15) und eine zweite Fläche (16) aufweist, wobei die erste Fläche (15) einen ersten Abschnitt (10a), einen zweiten Abschnitt (10b) und einen mittleren Abschnitt (10c) zwischen dem ersten Abschnitt (10a) und dem zweiten Abschnitt (10b) beinhaltet, wobei der erste Abschnitt (10a) und der zweite Abschnitt (10b) so ausgerichtet sind, dass sie nach außen in entgegengesetzte Richtungen gewandt sind, wobei der mittlere Abschnitt (10c) dazwischen liegt und der Anodenstromabnehmer (10) derart gefaltet ist, dass die zweite Fläche (16) nach innen in dem Anodenstromabnehmer (10) gewandt ist;
eine erste Anodenplattenschicht (21) auf dem ersten Abschnitt (10a) der ersten Fläche (15);
eine zweite Anodenplattenschicht (22) auf dem zweiten Abschnitt (10b) der ersten Fläche (15);
eine erste Festelektrolytschicht (31) auf einer Außenseite der ersten Anodenplattenschicht (21);
eine zweite Festelektrolytschicht (32) auf einer Außenseite der zweiten Anodenplattenschicht (22);
eine erste Kathodenplattenschicht (41) auf einer Außenseite der ersten Festelektrolytschicht (31);
eine zweite Kathodenplattenschicht (42) auf einer Außenseite der zweiten Festelektrolytschicht (32); und
eine elastische Lage (60) im Inneren eines Innenraums des gefalteten Anodenstromabnehmers (10),
**dadurch gekennzeichnet, dass**
die elastische Lage (60) dazu ausgelegt ist, eine Volumenänderung der Anodenplattenschichten (21, 22) während des Ladens und Entladens auszugleichen.

2. Elektrodenstruktur (100) nach Anspruch 1, wobei die elastische Lage (60) eine Urethanpolymerlage mit einer Verformungsrate in einem Bereich von etwa 30 % bis etwa 60 % beinhaltet.

3. Elektrodenstruktur (100) nach Anspruch 1 oder 2, ferner umfassend einen Kathodenstromabnehmer (50) auf einer Außenseite der ersten Kathodenplattenschicht (41) oder der zweiten Kathodenplattenschicht (42).

4. Elektrodenstruktur (100) nach einem der vorhergehenden Ansprüche, wobei der Anodenstromabnehmer (10) rostfreien Stahl beinhaltet.

5. Elektrodenstruktur (100) nach einem der vorhergehenden Ansprüche, wobei die zweite Fläche (16) und der mittlere Abschnitt (10c) der ersten Fläche (15) unbeschichtete Bereiche sind.

6. Elektrodenstruktur (100) nach einem der vorhergehenden Ansprüche, wobei die erste Anodenplattenschicht (21) und/oder die zweite Anodenplattenschicht (22) ein Kathodenaktivmaterial beinhaltet/beinhalten, das ein ternäres Lithiumübergangsmetalloxid mit einer mehrschichtigen Steinsalzstruktur beinhaltet.

7. Elektrodenstruktur (100) nach einem der vorhergehenden Ansprüche, wobei die erste Kathodenplattenschicht (41) und/oder die zweite Kathodenplattenschicht (42) ein Anodenaktivmaterial beinhaltet/beinhalten, das ein Gemisch aus ersten Partikeln, die amorphen Kohlenstoff beinhalten, und zweiten Partikeln, die Metalle oder Metalloide beinhalten, beinhaltet.

8. Elektrodenstruktur (100) nach Anspruch 7, wobei der Gehalt der zweiten Partikel in einem Bereich von etwa 8 Gew.-% bis etwa 60 Gew.-% bezogen auf das Gesamtgewicht des Gemischs liegt.

9. Festkörpersekundärbatterie (1000, 1000', 1000", 1000‴), umfassend einen Elektrodenstrukturstapel, in dem eine Vielzahl von Elektrodenstrukturen (100) nach einem der vorhergehenden Ansprüche gestapelt ist.

10. Festkörpersekundärbatterie (1000) nach Anspruch 9, ferner umfassend:
einen ersten äußersten Stapel (200) an einem Ende des Elektrodenstrukturstapels, welcher der Reihe nach gestapelt eine Kathodenplattenschicht (210), eine Festelektrolytschicht (220), eine Anodenplattenschicht (230), einen Anodenstromabnehmer (240) und eine elastische Lage (250) beinhaltet, und
einen zweiten äußersten Stapel (300) an einem anderen Ende des Elektrodenstrukturstapels, welcher der Reihe nach gestapelt einen Kathodenstromabnehmer (310), eine Kathodenplattenschicht (320), eine Festelektrolytschicht (330), eine Anodenplattenschicht (340), einen Anodenstromabnehmer (350) und eine elastische Lage (360) beinhaltet.

11. Festkörpersekundärbatterie (1000) nach Anspruch 9 oder 10, wobei:
die Elektrodenstruktur (100) ferner einen Kathodenstromabnehmer (50) darauf beinhaltet,
der Anodenstromabnehmer (10) der Elektrodenstruktur (100) eine Anodenlasche (11) beinhaltet, die davon vorsteht,
der Kathodenstromabnehmer (50) der Elektrodenstruktur (100) eine Kathodenlasche (51) beinhaltet, die davon vorsteht, und
die Anodenlasche (11) in einer gleichen Vorstehrichtung wie eine Vorstehrichtung der Kathodenlasche (51) vorsteht.

12. Festkörpersekundärbatterie (1000) nach Anspruch 9 oder 10, wobei:
die Elektrodenstruktur (100) ferner einen Kathodenstromabnehmer (50) darauf beinhaltet,
der Anodenstromabnehmer (10) der Elektrodenstruktur (100) eine Anodenlasche (11) beinhaltet, die davon vorsteht,
der Kathodenstromabnehmer (50) der Elektrodenstruktur (100) eine Kathodenlasche (51) beinhaltet, die davon vorsteht, und
die Anodenlasche (11) in einer Vorstehrichtung vorsteht, die zu einer Vorstehrichtung der Kathodenlasche (51) entgegengesetzt und parallel ist.

13. Festkörpersekundärbatterie (1000') nach einem der Ansprüche 9 bis 12, wobei der Anodenstromabnehmer (10) der Elektrodenstruktur (100) eine Anodenlasche (10d) an dem mittleren Abschnitt (10c) davon beinhaltet.

14. Festkörpersekundärbatterie (1000") nach einem der Ansprüche 9 bis 13, wobei:
die Vielzahl von Elektrodenstrukturen (100) eine erste Elektrodenstruktur (100a) in Kontakt mit einer zweiten Elektrodenstruktur (100b) beinhaltet und
eine Faltrichtung des Anodenstromabnehmers (10-1a) der ersten Elektrodenstruktur (100a) zu einer Faltrichtung des Anodenstromabnehmers (10-1b) der zweiten Elektrodenstruktur (100b) derart entgegengesetzt ist, dass sich eine Öffnung des gefalteten Anodenstromabnehmers (10-1a) der ersten Elektrodenstruktur (100a) in eine Richtung öffnet, die zu einer Öffnung des gefalteten Anodenstromabnehmers (10-1b) der zweiten Elektrodenstruktur (100b) entgegengesetzt ist.

15. Festkörpersekundärbatterie (1000‴) nach einem der Ansprüche 9 bis 14, wobei:
die Vielzahl von Elektrodenstrukturen (100) eine erste Elektrodenstruktur (100a') in Kontakt mit einer zweiten Elektrodenstruktur (100b') beinhaltet,
der erste Abschnitt (10-2a1) der ersten Fläche (100a') des Anodenstromabnehmers (10-2a) der ersten Elektrodenstruktur (100a') und der zweite Abschnitt (10-2a2) der ersten Fläche (15) des Anodenstromabnehmers (10-2a) der zweiten Elektrodenstruktur (100b') die elastische Lage (60a') der ersten Elektrodenstruktur (100a') dazwischen kontaktieren und aufnehmen und
der zweite Abschnitt (10-2a2) der ersten Fläche (15) des Anodenstromabnehmers (10-2a) der ersten Elektrodenstruktur (100a') und der erste Abschnitt (10-2a1) der ersten Fläche (15) des Anodenstromabnehmers (10-2a) der zweiten Elektrodenstruktur (100b') die elastische Lage (60b') der zweiten Elektrodenstruktur (100b') dazwischen kontaktieren und aufnehmen.

## Revendications

1. Structure d'électrode (100), comportant :
un collecteur (10) de courant d'anode ayant une première surface (15) et une deuxième surface (16), la première surface (15) incluant une première partie (10a), une deuxième partie (10b) et une partie centrale (10c) entre la première partie (10a) et la deuxième partie (10b), la première partie (10a) et la deuxième partie (10b) étant orientées vers l'extérieur dans des directions opposées avec la partie centrale (10c) entre elles, et le collecteur (10) de courant d'anode étant plié de sorte que la deuxième surface (16) est orientée vers l'intérieur dans le collecteur (10) de courant d'anode ;
une première couche (21) de plaque d'anode sur la première partie (10a) de la première surface (15) ;
une deuxième couche (22) de plaque d'anode sur la deuxième partie (10b) de la première surface (15) ;
une première couche (31) d'électrolyte solide sur un côté externe de la première couche (21) de plaque d'anode ;
une deuxième couche (32) d'électrolyte solide sur un côté externe de la deuxième couche (22) de plaque d'anode ;
une première couche (41) de plaque de cathode sur un côté externe de la première couche (31) d'électrolyte solide ;
une deuxième couche (42) de plaque de cathode sur un côté externe de la deuxième couche (32) d'électrolyte solide ;
et une feuille élastique (60) à l'intérieur d'un espace intérieur du collecteur (10) de courant d'anode plié, **caractérisée en ce que**
la feuille élastique (60) est configurée pour compenser un changement de volume des couches (21, 22) de plaque d'anode pendant la charge et la décharge.

2. Structure d'électrode (100) selon la revendication 1, dans laquelle la feuille élastique (60) inclut une feuille de polymère d'uréthane ayant un taux de déformation dans une plage d'environ 30 % à environ 60 %.

3. Structure d'électrode (100) selon la revendication 1 ou 2, comportant en outre un collecteur (50) de courant de cathode sur un côté extérieur de la première couche (41) de plaque de cathode ou de la deuxième couche (42) de plaque de cathode.

4. Structure d'électrode (100) selon l'une quelconque des revendications précédentes, dans laquelle le collecteur (10) de courant d'anode inclut de l'acier inoxydable.

5. Structure d'électrode (100) selon l'une quelconque des revendications précédentes, dans laquelle la deuxième surface (16) et la partie centrale (10c) de la première surface (15) sont des régions non revêtues.

6. Structure d'électrode (100) selon l'une quelconque des revendications précédentes, dans laquelle la première couche (21) de plaque d'anode et/ou la deuxième couche (22) de plaque d'anode incluent un matériau actif de cathode incluant un oxyde métallique de transition au lithium ternaire ayant une structure de sel de roche stratifiée.

7. Structure d'électrode (100) selon l'une quelconque des revendications précédentes, dans laquelle la première couche (41) de plaque de cathode et/ou la deuxième couche (42) de plaque de cathode incluent un matériau actif d'anode incluant un mélange de premières particules incluant du carbone amorphe et de deuxièmes particules incluant des métaux ou des métalloïdes.

8. Structure d'électrode (100) selon la revendication 7, dans laquelle la teneur des deuxièmes particules est dans une plage d'environ 8 % à environ 60 % en poids par rapport au poids total du mélange.

9. Batterie secondaire entièrement solide (1000, 1000', 1000", 1000"') comportant un empilement de structures d'électrode dans lequel une pluralité de structures d'électrode (100) selon l'une quelconque des revendications précédentes sont empilées.

10. Batterie secondaire entièrement solide (1000) selon la revendication 9, comportant en outre :
un premier empilement (200) le plus extérieur à une extrémité de l'empilement de structure d'électrode et incluant une couche (210) de plaque de cathode, une couche (220) d'électrolyte solide, une couche (230) de plaque d'anode, un collecteur (240) de courant d'anode et une feuille élastique (250) empilés séquentiellement, et
un deuxième empilement (300) le plus extérieur à une autre extrémité de l'empilement de structure d'électrode et incluant un collecteur (310) de courant de cathode, une couche (320) de plaque de cathode, une couche (330) d'électrolyte solide, une couche (340) de plaque d'anode, un collecteur (350) de courant d'anode et une feuille élastique (360) empilés séquentiellement.

11. Batterie secondaire entièrement solide (1000) selon la revendication 9 ou 10, dans laquelle : la structure d'électrode (100) inclut en outre un collecteur (50) de courant de cathode sur celle-ci, le collecteur (10) de courant d'anode de la structure d'électrode (100) inclut une languette (11) d'anode faisant saillie depuis celui-ci, le collecteur (50) de courant de cathode de la structure d'électrode (100) inclut une languette (51) de cathode faisant saillie depuis celui-ci, et la languette (11) d'anode fait saillie dans une même direction de saillie que la languette (51) de cathode.

12. Batterie secondaire entièrement solide (1000) selon la revendication 9 ou 10, dans laquelle
la structure d'électrode (100) inclut en outre un collecteur (50) de courant de cathode sur celle-ci,
le collecteur (10) de courant d'anode de la structure d'électrode (100) inclut une languette (11) d'anode faisant saillie depuis celui-ci,
le collecteur (50) de courant de cathode de la structure d'électrode (100) inclut une languette (51) de cathode faisant saillie depuis celui-ci, et
la languette (11) d'anode fait saillie dans une direction de saillie qui est opposée et parallèle à une direction de saillie de la languette (51) de cathode.

13. Batterie secondaire entièrement solide (1000') selon l'une quelconque des revendications 9 à 12, dans laquelle le collecteur (10) de courant d'anode de la structure d'électrode (100) inclut une languette (10d) d'anode sur la partie centrale (10c) de celui-ci.

14. Batterie secondaire entièrement solide (1000") selon l'une quelconque des revendications 9 à 13, dans laquelle : la pluralité de structures d'électrodes (100) inclut une première structure d'électrode (100a) en contact avec une deuxième structure d'électrode (100b), et
une direction de pliage du collecteur (10-1a) de courant d'anode de la première structure d'électrode (100a) est opposée à une direction de pliage du collecteur (10-1b) de courant d'anode de la deuxième structure d'électrode (100b) de sorte qu'une ouverture du collecteur (10-1a) de courant d'anode plié de la première structure d'électrode (100a) s'ouvre dans une direction opposée à une ouverture du collecteur (10-1b) de courant d'anode plié de la deuxième structure d'électrode (100b).

15. Batterie secondaire entièrement solide (1000""") selon l'une quelconque des revendications 9 à 14, dans laquelle : la pluralité de structures d'électrode (100) inclut une première structure d'électrode (100a') en contact avec une deuxième structure d'électrode (100b'),
la première partie (10-2a1) de la première surface (100a') du collecteur (10-2a) de courant d'anode de la première structure d'électrode (100a') et la deuxième partie (10-2a2) de la première surface (15) du collecteur (10-2a) de courant d'anode de la deuxième structure d'électrode (100b') entrent en contact et logent la feuille élastique (60a') de la première structure d'électrode (100a') entre elles, et
la deuxième partie (10-2a2) de la première surface (15) du collecteur (10-2a) de courant d'anode de la première structure d'électrode (100a') et la première partie (10-2a1) de la première surface (15) du collecteur (10-2a) de courant d'anode de la deuxième structure d'électrode (100b') entrent en contact et logent la feuille élastique (60b') de la deuxième structure d'électrode (100b') entre elles.
